# EUROPEAN PATENT SPECIFICATION

(11) **EP 3 672 257 B1**
(45) Date of publication and mention of the grant of the patent: **15.05.2024**
(21) Application number: 19217652.7
(22) Date of filing: 18.12.2019
(51) Int. Cl.: H04N 21/2187, H04N 21/6377, H04N 21/6587

(54) **A SYSTEM FOR CONDITIONED GENERATION OF VIDEOS INHERENT TO A SPORT EVENT**
EIN SYSTEM ZUR BEDINGTEN ERZEUGUNG VON VIDEOS, DIE EINEM SPORTEREIGNIS INHÄRENT SIND
SYSTÈME DE GÉNÉRATION CONDITIONNÉE DE VIDÉOS INHÉRENTES À UN ÉVÉNEMENT SPORTIF

(30) Priority: 20.12.2018 IT 201800020311
(43) Date of publication of application: 24.06.2020
(73) Proprietor: Farina Gaetano, Giangiacomo, 96100 Siracusa SR (IT)
(72) Inventor: Farina Gaetano, Giangiacomo, 96100 Siracusa SR (IT)
(74) Representative: Tansini, Elio Fabrizio

(56) References cited:
- WO-A1-2017/034767
- US-A1- 2016 247 537
- US-B1- 9 760 572

## Description

### FIELD OF APPLICATION

The present invention relates to a system for conditioned generation of videos inherent to a sports event.

In particular, the invention relates to a system for conditioned generation of videos inherent to a sports event wherein a plurality of players take part in the sports event, and the following description refers to this field of application to simplify its presentation.

### PRIOR ART

During sports events, such as in particular football matches, events considered to be important occupy a very limited portion of time with respect to the total duration of the event.

Furthermore, different users can consider different events as being important within the total duration of the event.

Consequently, to obtain video portions of such events that are subjectively considered as important, non-standard post-processing of the video comprising the whole event is required.

Such post-processing is complex to perform and requires *ad hoc* processing tools and is inconvenient in terms of the amount of time required.

WO2017/034767 describes an example of post-processing. WO2017/034767 comprises a computer accessible via the web provided with a communication interface configured to receive a multitude of information on players engaged in a sports event. The computer sends data packages, comprising said multitude of information, to a user connected to the web, through the communication interface. WO2017/034767 does not show a system that determines the recording of video flows sent *a priori* by the user, i.e. it does not envisage a "trigger"/request that determines the recording of a specific video flow within an unconditioned filming of a complete whole event.

A general object of the present invention is to overcome the drawbacks of the known art.

The specific aim of the invention is to create a system for conditioned generation of videos inherent to a sports event that is optimised in terms of performance efficiency.

The further aim of the invention is to create a system for generating conditioned videos inherent to a sports event that is able to provide a video to a player, in a completely automated way, precisely corresponding to an important event requested.

The further aim of the invention is to create a system for generating conditioned videos inherent to a sports event that can also be used by any inexperienced user.

### SUMMARY OF THE INVENTION

These and other objects are reached by a system for conditioned generation of videos inherent to a sports event according to what is disclosed in claim 1.

Advantageous aspects are disclosed in dependent claims 2 to 14.

Further aspects of the invention are described in claim 15.

The invention as described allows the generation of videos inherent to a sports event conditioned to an important event, achieving the following technical effects:
- optimisation of the generation of videos in terms of performance efficiency;
- independence of the generation of videos from post-processing depending on the requesting user;
- usability by the user in shorter time scales and in a completely automated way;
- usability also by any inexperienced user, particularly who is not able to perform post-processing on a video.

The technical effects/advantages mentioned, and other technical effects/advantages of the invention, will emerge in further detail from the description provided herein below of an example of embodiment provided by way of approximate and non-limiting example with reference to the appended drawings.

### BRIEF DESCRIPTION OF THE DRAWINGS

Figure 1 is a block diagram of the system according to the invention, in an overall view.
Figure 2 shows the detail of two components shown in Figure 1, in particular an interaction device and an electronic memory of sports events.
Figures 3A and 3B show two embodiments of the interaction device shown in Figures 1 and 2.
Figure 4 shows a detail of the interaction device of Figure 3B.

### DETAILED DESCRIPTION

The invention describes a system for the conditioned generation of videos inherent to a sports event ES comprising: at least one television camera TLC1;TLC2 provided to record a timed video stream Stream1;Stream2 of the event ES; an electronic memory of sports events DB_ES comprising data of sports events DES; an interaction device 2 configured for interfacing with players Gi; a central processing unit 10 in data communication with the at least one television camera TLC1 ;TLC2 and with the interaction device 2 and configured to: receive the video stream Stream1,Stream2 following a previous receipt of a sports event start signal S_INIT_ES generated subject to recognition of a requesting player Gi; processing the video stream Stream1;Stream2, thus obtaining a video portion Stream1_Gi, Stream2_Gi, referring to the requesting player Gi, and defined as a function of a plurality of criteria; transmitting the obtained video portion Stream1_Gi, Stream2_Gi to a video memory DB_Vid accessible only subject to identification of the requesting player Gi.

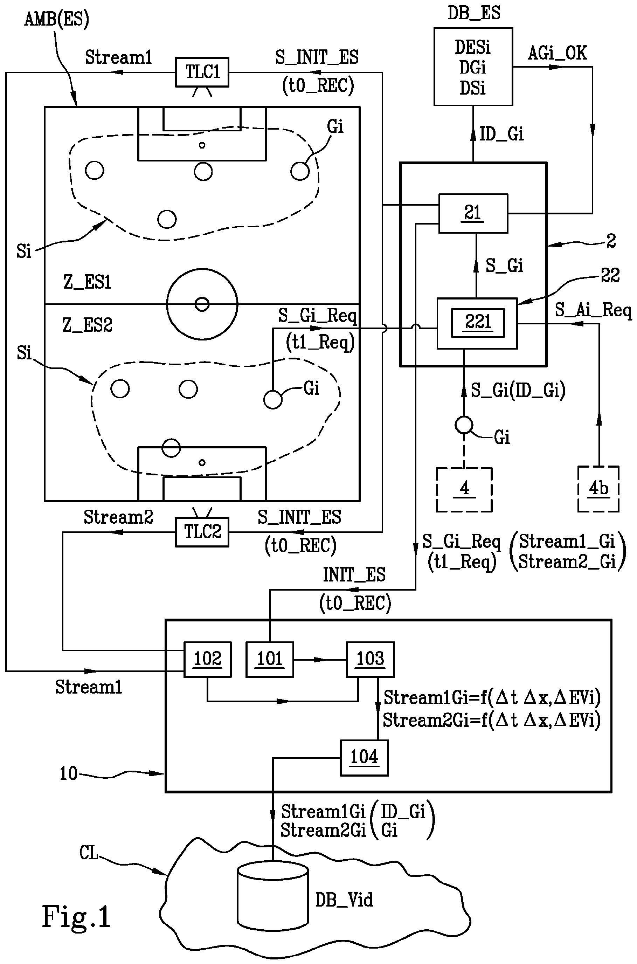

With particular reference to figure 1, the system for conditioned generation of videos inherent to a sports event ES, according to the invention, comprises an environment AMB for the performance of the sports event ES and at least one television camera TLC1,TLC2 installed at the aforesaid environment AMB.

The at least one television camera TLC1;TLC2 faces towards at least one performance zone Z_ES1 ;Z_ES2 of the sports event ES, and is provided to record a corresponding timed video stream Stream1;Stream2 of the event ES in the at least one performance zone Z_ES1;Z_ES2.

In a preferred embodiment, the system comprises a first television camera TLC1, a second television camera TLC2, a first performance zone Z_ES1 and a second performance zone Z_ES2.

For example, the performance zone Z_ES1 or Z_ES2 can be a half field of a playing field or, in particular, for the football game, a penalty area.

With reference to figure 1, the system of the invention comprises an electronic memory of sports events DB_ES.

Such memory comprises data of sports events DESi associated with each sports events ES, player data DGi associated with each individual player Gi and team data DSi associated with each individual team Si, wherein each player Gi, team Si, and sports event ES is identified by a corresponding player identifier ID_Gi, team identifier ID_Si and sports event identifier ID_ESi, respectively.

At least two teams Si are associated with each sports event ES so that at least two of the team identifiers ID_Si are connected to the sports event identifier ID_ESi.

A plurality of players Gi is associated with each individual team Si so that a plurality of player identifiers ID_Gi are connected to the team identifier ID_Si.

The memory of sports events DB_ES can further comprise the data of a referee DA associated with a referee A, associated with the sports event ES.

The system of the invention comprises a user device 4, associated with every potential player Gi, and configured to make the player Gi communicate with the system of the invention to allow a registration of the player Gi for a sports event ES.

The registration of the sports event ES will also comprise the type of environment AMB of performance of the sports event, i.e. one from among a 5-aside football pitch, basketball court, a 7-aside football pitch, a11-aside football pitch, etc.

Preferably, the user device 4 comprises one from among a smartphone, a tablet, a PDA, a notebook or a similar device.

In a registration step of the event ES, i.e. in a step in which an environment AMB is associated with a sports event ES, the players Gi must register for the event ES.

An application for the user device 4 is provided, configured to allow a registration of the player Gi for the sports event ES.

Each player Gi registers on the system, creates his/her profile and registers for a sports event ES in a team Si by associating a photo/image Pic_Gi with his/her registration which identifies the specific player Gi.

According to the invention, a corresponding team identifier ID_Si is connected with each performance zone Z_ES1, Z_ES2.

For example, in a 5-aside football pitch, a performance zone Z_ES_1 is a half field in which a team Si attacks.

In an embodiment of the invention, the first television camera TLC1 is provided to record a first timed video stream Stream1 of the sports event ES in the first performance zone Z_ES1.

The second television camera TLC2 is instead provided to record a second timed video stream Stream2 of the sports event ES in the second performance zone Z_ES2.

Preferably, various television cameras can be present for each performance zone.

With reference to figure 1, the system of the invention further comprises an interaction device 2 located in proximity to the at least one performance zone Z_ES1 ;Z_ES2.

The interaction device 2 comprises a user interface 22 for interfacing with the players Gi, and a local processing unit 21 connected to the electronic memory of sports events DB_ES.

According to the invention, the user interface 22 is configured to receive a representative signal of presence S_Gi from each player Gi, wherein the representative signal of presence S_Gi comprises the player identifier ID_Gi.

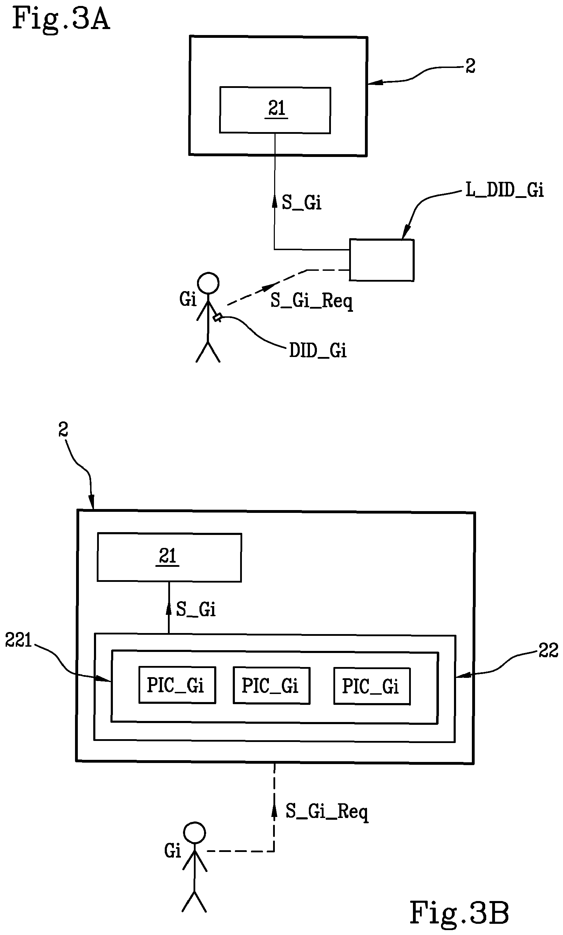

In an embodiment of the invention, with particular reference to figure 3A, the system comprises an identification device DID_Gi wearable by each individual player Gi and an identification device reader L_DID_Gi connected to the interaction device 2, and preferably located in proximity to the interaction device 2.

In a preferred embodiment of the invention, the wearable identification device DID_Gi comprises a bracelet provided with a transceiver, in particular at radio frequency, preferably of the NFC type.

According to the invention, the representative signal of presence S_Gi is generated by the identification device reader L_DID_Gi after having read the identification device DID_Gi.

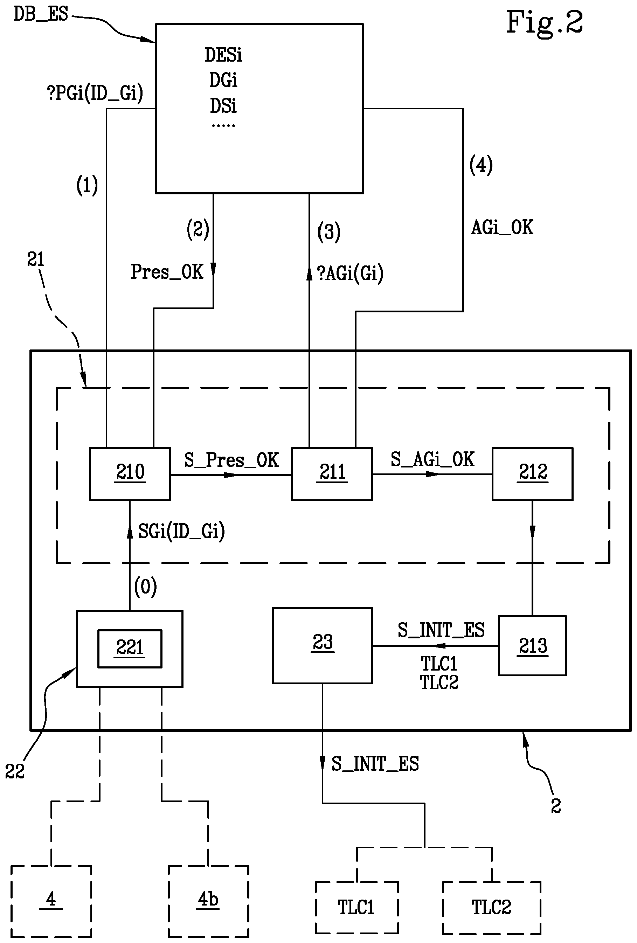

The representative signal of presence S_Gi will then be processed by the local processing unit 21, as described herein below, with specific reference to figure 2.

In an alternative embodiment, the user interface 22 comprises a touch-screen 221 (Fig.3B) comprising digital photographs Pic_Gi, each corresponding to a player Gi; the photographs Pic_Gi can be selected by each corresponding player Gi for generating the representative signal of presence S_Gi.

Preferably, the selection of the photograph Pic_Gi takes place through the touch on the touch-screen 221 by the player Gi on his/her own digital photograph Pic_Gi.

Returning to the processing unit 21, with particular reference to figure 2, it should be noted that in the present context and in the subsequent claims, such unit is presented as being split into distinct functional modules (storage modules or operative modules) for the sole purpose of describing its functionalities clearly and completely.

Actually, such unit, in one case, can be constituted by a single electronic device, suitably programmed for performing the functions described, and the various modules can correspond to a hardware entity and/or routine software that are part of the programmed device.

Alternatively or additionally, these functionalities can be performed by a plurality of electronic devices on which the aforesaid functional modules can be distributed.

The processing unit 21 can also make use of one or more processors for executing the instructions contained in the memory modules.

The aforementioned functional modules can also be distributed on different local or remote computers, depending on the architecture of the network in which they reside.

In a specific function of the invention, the local processing unit 21 is configured to verify a presence PGi of each player Gi in the electronic memory of sports events DB_ES as a function of the corresponding player identifier ID_Gi received through the user interface 22.

In the event of confirmed presence Pres_OK, the local processing unit 21 is configured to generate a confirmed presence signal S_Pres_OK.

A first verification module 210 (fig. 2) is configured for these confirmation signal generation verification operations.

The local processing unit 21 is further configured to verify an association AGi of the player Gi with the sports event ES.

In the event of association of the confirmed player AGi_OK, the local processing unit 21 is configured to generate a confirmed recognised player signal S_AGI_OK.

A second verification module 211 (fig. 2) is configured for these confirmation signal generation verification operations.

The local processing unit 21 is further configured to generate a sports event start signal S_INIT_ES as a function of the generated recognised player confirmation signal S_AGI_OK for at least one sub-set sub_Gi of the players Gi.

Preferably, the processing unit 21 is configured to control a selectable number of players pertaining to the sub-set sug_Gi, before allowing the generation of the sports event start signal S_INIT_ES.

The technical effect achieved is the automated verification of the presence of the players Gi at the sports event ES.

A signal generation module 212 (fig.2) is configured to generate the sports event start signal S_INIT_ES, as described.

The interaction device 2, according to the invention, further comprises a transmission means (23) provided to transmit the sports event start signal S_INIT_ES to the at least one television camera TLC1;TLC2.

In this way a recording start time t0_REC of the timed video streams Stream1,Stream2 is determined.

According to the invention, the local processing unit 21 is further configured to determine for which of the first television camera TLC1 or the second television camera TLC2 to generate the sports event start signal S_INIT_ES; the corresponding processing is performed as a function of the recognised player Gi, of a corresponding said team identifier ID_Si and of a corresponding performance zone Z_ES1;Z_ES2.

An operating module 213 (fig.2) is configured for this purpose.

This is made possible by the structuring of the data in the electronic memory of sports events DB_ES wherein every television camera is identified as being arranged to record a timed video stream of the sports event ES in an identified performance zone Z_ES1.

What has been described allows the system of the invention to arrange the connections and activations among the different components of the system in preparation for the sports event ES.

The user interface (22) is further provided to manage an interaction with players Gi during the sports event ES.

In particular, the user interface 22 is configured to receive a request signal S_Gi_req from a recognised player Gi representative of a request for the generation of a video corresponding to a video portion Stream1_Gi, Stream2_Gi of the video stream Stream1, Steam2; the request signal S_Gi_req is received at a request time t1_Req subsequent to the recording start time t0_REC.

In an embodiment already partly described, an identification device DID_Gi is provided, wearable by each individual player Gi and an identification device reader L_DID_Gi connected to the interaction device 2.

In this embodiment, the request signal S_Gi_req is generated by the identification device reader L_DID_Gi after having read the identification device DID_Gi.

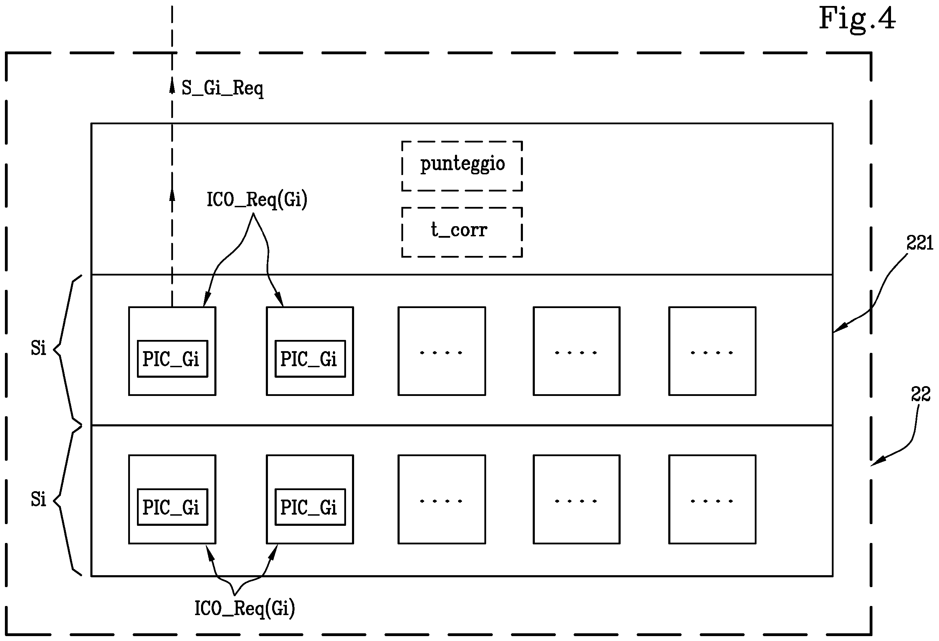

In an alternative or additional embodiment, with particular reference to figure 4, the touch-screen 221 comprises request icons ICO_Req of videos of important events EV.

Each request icon ICO_Req corresponds to a recognised player Gi, and the request signal S_Gi_req is determined by a touch of the recognised player Gi on his/her own request icon ICO_Req.

In a further alternative embodiment, the request signal S_Gi_req is determined by recognition software SW of the recognised player Gi that identifies the player Gi as a function of one or more from among a facial recognition, a recognition of the shirt number and important action.

The technical effect achieved by the described functionalities of the user interface 22 is the precise identification of the player requesting the recording of an important event EV during the sports event ES.

The system according to the invention further comprises a central processing unit 10 in data communication with the at least one television camera TLC1 ,TLC2 and with the interaction device 2.

In the present context and in the subsequent claims, such unit is presented as being split into distinct functional modules (storage modules or operative modules) for the sole purpose of describing its functionalities clearly and completely.

Actually, such unit, in one case, can be constituted by a single electronic device, suitably programmed for performing the functions described, and the various modules can correspond to a hardware entity and/or routine software that are part of the programmed device.

Alternatively or additionally, these functionalities can be performed by a plurality of electronic devices on which the aforesaid functional modules can be distributed.

The central processing unit 10 can also make use of one or more processors for executing the instructions contained in the storage modules.

The aforementioned functional modules can also be distributed on different local or remote computers, depending on the architecture of the network in which they reside.

With particular reference to figure 1, the central processing unit 10 is configured to receive from the local processing unit 21:
- the sports event start signal S_INIT_ES referring to the recording start time t0_REC;
- the request signal S_Gi_req received at a request time t1_Req subsequent to the recording start time t0_REC.

A first receiving module 101 (fig.1) is configured for this purpose.

The central processing unit 10 is further configured to receive the video stream Stream1;Stream2 from the at least one television camera TLC1;TLC2 following a previous receipt of the sports event start signal S_INIT_ES.

In particular, the central processing unit 10 is configured to receive one of the first video stream Stream1 and the second video stream Stream2 from one of the first television camera TLC1 and the second television camera TLC2 for which the sports event start signal S_INIT_ES was generated.

A second receiving module 102 (fig.1) is configured for this purpose.

Preferably, if there are various television cameras for each performance zone Z_ES1, Z_ES2, the central processing unit 10 can receive various video flows Stream1, Stream2 representing a same event filmed from different angles.

The central processing unit 10 is further configured for processing the video stream Stream1 ,Stream2 as a function of the request signal S_Gi_req.

A processing module 103 (fig.1) is configured for this purpose.

According to the invention, the processing of the video stream as a function of the request signal S_Gi_req allows a video portion Stream1_Gi, Steam2_Gi to be obtained defined as a function of the request time t1_Req, of a selectable representative value of an amplitude ΔA of the environment AMB, and of a selectable important event duration ΔtEV.

The technical effect achieved is the obtaining of a video portion for the recognised player Gi that substantially coincides with the important event EV requested by the recognised player Gi, without additional parts external to the important event and without the need for post-processing by the player Gi him/herself.

In particular, the request time t1_Req identifies the time at which the player Gi touches the user interface 22 or is recognised through the identification device DID_Gi following an important event EV that has occurred, such as the scoring of a goal.

Alternatively, the important event EV may be an action of a game that comprises a significant athletic gesture.

In a further alternative, the important event EV may be an action of a game that comprises incorrect behaviour to be investigated.

In the latter case, the referee A can determine the generation of a request signal S_Ai_Req, generated with the same request signal S_Gi_Req methods but with a different aim. The central processing unit 10 is configured to process the video stream Stream1 ,Stream2 as a function of the request signal S_Ai_Req to define a video portion Stream1_Ai, Stream2_Ai; this video portion can be consulted by the referee as a replay for a function that can be likened to the VAR in football.

In this embodiment, the referee A has a special user device 4B, e.g. a tablet, on which to receive almost in real time the video portions Stream1_Ai, Stream2_Ai.

However, the indication of the moment in time t1_Req, must be refined so as to allow the central processing unit 10 to generate the correct video portion Stream1_Gi, Stream2_Gi with reference to the correct important event, without any parts that do not refer to the important event EV.

According to the invention, the representative value of an amplitude ΔA of the environment AMB allows a delay ΔREV to be calculated between the time at which the important event EV finished and the time of the request t1_Req by the recognised player Gi.

The representative value of an amplitude ΔA can be selected as a function of a surface area measurement of the environment AMB.

In other words, if the environment AMB in which the sports event is placed is a 5-aside football pitch or a volleyball or basketball court, the amplitude ΔA will have a lower value than that of a 7-aside football pitch and all these amplitudes will be lower than the one referring to an 11-aside football pitch. The processing unit 22 is configured to detect the amplitude ΔA of the environment AMB as a function of the type of environment AMB associated with the sports event ES during registration.

The delay ΔREV shall be commensurate with the dimensions of the environment AMB, representing an average travel time from one of the performance zones Z_ES1, Z_ES2 to the interaction device 2 through which the recognised player Gi reports the important event EV.

According to the invention, the important event duration ΔEV can be selected as a function of the type of sports event ES.

For example, in basketball or 5-aside football, the marking actions (baskets or goals) are quick, in 7-aside they are slower and in 11-aside even slower, etc.

According to what has been described, the video portion Stream1_Gi, Steam2 will correspond to a time interval ΔT defined as a function of t1_Req, ΔREV and ΔtEV.

In particular, a start time t1 of the time interval ΔT will be given by t1= t1_Req-ΔREV-ΔtEV.

In particular, an end time t2 of the time interval ΔT will be given by t2= t1_Req- ΔREV.

In one example, considering an environment AMB such as a 5-aside football team, if the timings t1_Req = 60s, ΔREV = 5s and ΔtEV = 30s are valid, the start time t1 will be given by 25s, whereas the end time t2 will be given by 55s, both times being calculated starting from the recording start time t0_REC previously defined.

Following the generation of the video portion Stream1_Gi, Steam2, the central processing unit 10 is further configured to transmit the obtained video portion Stream 1 _Gi Steam2_Gi to a video memory DB_Vid in which the video portion Stream1_Gi, Stream2_Gi obtained is associated with the identifier ID_Gi of the recognised player Gi so that it is accessible thereby only subject to identification.

A transmission module 104 (fig.1) is configured for this purpose.

In the event that there are various television cameras for each performance zone Z_ES1, Z_ES2, the user could choose to see various video portions Stream1_Gi, Stream2_Gi referring to the correct important event, filmed from different angles, and without any parts that do not refer to the important event EV.

The system according to the invention further comprises a cloud memory CL (fig.1) comprising the video memory DB_Vid.

According to the invention, the video memory DB_Vid is accessible by downloading the video portion Stream1_Gi, Steam2_Gi by the recognised player Gi.

In other words, the video portion Stream1_Gi, Stream2_Gi obtained is associated with the identifier ID_Gi of the recognised player Gi so that it is accessible thereby only subject to identification.

The user device 4 associated with said player Gi comprises the player identifier ID_Gi and is configured to be connected to the cloud memory CL for downloading the video portion Stream1_Gi, Steam2_Gi subject to verifying the correspondence between the player identifier ID_Gi requiring the video portion Stream1_Gi, Steam2_Gi and the identifier ID_Gi of the recognised player Gi associated with the video portion Stream1_Gi, Stream2_Gi in the cloud memory CL.

The user device according to the invention, in particular a smartphone, comprises an application configured to:
- allow a registration of the player Gi for a sports event (ES), as previously described;
- be connected to the cloud memory CL for downloading the video portion Stream1_Gi, Steam2_Gi subject to checking the correspondence between the player identifier ID_Gi associated with the smartphone, and the identifier ID_Gi of the said recognised player Gi associated with the video portion Stream1_Gi, Stream2_Gi in the cloud memory CL.

In a further aspect, the invention comprises a computer program configured, when running, to run one or more of the functions of the interaction device 2 and/or of the central processing unit 10 and/or of the user device 4.

An invention has been described that allows the generation of videos inherent to a sports event conditioned to an important event, achieving the following technical effects:
- optimisation of the generation of videos in terms of performance efficiency;
- independence of the generation of videos from post-processing depending on the requesting user;
- usability by the user in shorter time scales and in a completely automated way;
- usability also be any inexperienced user, particularly who is not able to perform post-processing on a video.

## Claims

1. A system for the conditioned generation of videos (Stream1_Gi, Stream2_Gi) inherent to a sports event (ES) comprising:
o an environment (AMB) for the performance of said sports event (ES);
o at least one television camera (TLC1;TLC2) installed at said environment (AMB), facing towards at least one performance zone (Z_ES1;Z_ES2) of said sports event (ES), arranged to record a corresponding timed video stream (Stream 1 ;Stream2) of said event (ES) in said at least one performance zone (Z_ES1; Z_ES2);
o a plurality of players (Gi) taking part in and being registered for said sports event (ES) located in said environment (AMB);
o an electronic memory of sports events (DB_ES) comprising data of sports events (DESi) associated with each of said sports events (ES), player data (DGi) associated with each individual player (Gi) and team data (DSi) associated with each individual team (Si), wherein each individual player (Gi), individual team (Si), and sports event (ES) is identified by a corresponding player identifier (ID_Gi), team identifier (ID_Si) and sports event identifier (ID_ESi), respectively;
o an interaction device (2) located in proximity to said at least one performance zone (Z_ES1;Z_ES2) and comprising:
a user interface (22) for interfacing with said individual players (Gi), wherein said user interface (22) is configured to receive a representative signal of presence (S_Gi) from each of said individual players (Gi), wherein said representative signal of presence (S_Gi) comprises said player identifier (ID_Gi);
a local processing unit (21) connected to said electronic memory of sports events (DB_ES) and configured to:
- verify a presence (PGi) of each of said individual players (Gi) in said electronic memory of sports events (DB_ES) as a function of said corresponding player identifier (ID_Gi) received through said user interface (22), and in the case of confirmed presence, generate a signal of confirmed presence (S_Pres_OK);
- verify an association (AGi) of each of said individual player (Gi) with said sports event (ES), and in the case of confirmed association of said player (AGi_OK), generate a recognised player confirmation signal (S_AGI_OK);
- controlling a selectable number of players pertaining to at least one sub-set (sub_Gi) of said players (Gi);- generate a sports event start signal (S_INIT_ES) as a function of said generated recognised player confirmation signal (S_AGI_OK) for said at least one sub-set (sub_Gi) of said players (Gi);
a transmission means (23) arranged to transmit said sports event start signal (S_INIT_ES) to said at least one television camera (TLC1 ;TLC2) thus determining a recording start time (t0_REC) of said timed video streams (Stream 1 ;Stream2);
**characterised in that**:
said user interface (22) is further arranged to:
receive a request signal (S_Gi_req) from a recognised player representative of a request for the generation of a video corresponding to a video portion (Stream1_Gi, Stream2_Gi) of said video streams (Stream1, Stream2), wherein said request signal (S_Gi_req) is received at a request time (t1_Req) subsequent to said recording start time (t0_REC);
∘ said system further comprising a central processing unit (10) in data communication with at least one said television camera (TLC1;TLC2) and with said interaction device (2) and configured to:
receive from said local processing unit (21):
- said sports event start signal (S_INIT_ES) referring to said recording start time (t0_REC);
- said request signal (S_Gi_req) received at said request time (t1_Req) subsequent to the recording start time (t0_REC);
receive said video stream (Stream1;Stream2) from said at least one television camera (TLC1;TLC2) following a previous receipt of said sports event start signal (S_INIT_ES);
process said video stream (Stream1;Stream2) as a function of said request signal (S_Gi_req), thus obtaining said defined video portion (Stream 1_Gi, Stream2_Gi) as a function of said request time (t1_Req), of a selectable representative value of an amplitude (ΔA) of said environment (AMB) representative of a surface measurement of said environment (AMB), and of a selectable important event duration (AtEV), thereby causing a generation of said video portion (Stream 1_Gi, Stream2_Gi) conditioned by said selection of said request time (t1_Req), of said representative value of an amplitude (ΔA) of said environment (AMB) and of said selectable important event duration (ΔtEV);
transmit said obtained video portion (Stream1_Gi, Stream2_Gi) to a video memory (DB_Vid) wherein said video portion (Stream1_Gi, Stream2_Gi) obtained is associated with said identifier (ID_Gi) of said recognised player so as to be accessible by him only subject to identification.

2. The system according to claim 1 wherein said important event duration (ΔEVi) can be selected as a function of the type of sports event (ES).

3. The system according to any one of the preceding claims wherein in said electronic memory of sports events (DB_ES):
- at least two teams (Si) are associated with each sports event (ES) so that at least two of said team identifiers (ID_Si) are connected to said sports event identifier (ID_ESi).
- a plurality of players (Gi) is associated with each individual team (Si) so that a plurality of player identifiers (ID_Gi) are connected to said team identifier (ID_Si).

4. The system according to claim 3, wherein:
said at least one television camera (TLC1 ;TLC2) comprises a first television camera (TLC1) and a second television camera (TLC2);
said at least one performance zone (Z_ES1; Z_ES2) comprises a first performance zone (Z_ES1) and a second performance zone (Z_ES2), a corresponding said team identifier (ID_Si) being connected to each performance zone (Z_ES1; Z_ES2);
wherein said first television camera (TLC1) is provided to record a first video stream (Stream 1) of said timed video streams (Stream 1; Stream2) of said sports event (ES) in said first performance zone (Z_ES1);
wherein said second television camera (TLC2) is provided to record a second video stream (Stream2) of said timed video streams (Stream1;Stream2) of said sports event (ES) in said second performance zone (Z_ES2).

5. The system according to claim 4, wherein:
said local processing unit (21) is further configured to:
determine for which of said first television camera (TLC1) or said second television camera (TLC2) to generate said sports event start signal (S_INIT_ES), as a function of said recognised player, of a corresponding said team identifier (ID_Si) and of a corresponding performance zone (Z_ES1; Z_ES2),
said one central processing unit (10) is further configured to:
receive one of said first video stream (Stream 1) and said second video stream (Stream2) from one of said first television camera (TLC1) and said second television camera (TLC2) for which said sports event start signal (S_INIT_ES) was generated.

6. The system according to any one of the preceding claims wherein said user interface (22) comprises a touch-screen (221) comprising digital photographs (Pic_Gi), each corresponding to a said player (Gi), said digital photographs (Pic_Gi) being selectable from each corresponding said player (Gi) for generating said representative signal of presence (S_Gi).

7. The system according to claim 6 wherein said selection of said photograph (Pic_Gi) takes place through the touch of said player (Gi) on his/her own digital photograph (Pic_Gi).

8. The system according to claim 6 or 7, wherein said touch-screen (221) comprises request icons (ICO_Req) of videos of important events (EV), each corresponding to a recognised player , and said request signal (S_Gi_req) is determined by a touch of said recognised player on his/her own said request icon (ICO_Req).

9. The system according to any one of claims 1 to 7, wherein said request signal (S_Gi_req) is determined by recognition software (SW) of said recognised player that identifies said player (Gi) as a function of one or more from among a facial recognition, a recognition of the shirt number and important action.

10. The system according to any one of claims 1 to 8 comprising an identification device (DID_Gi) wearable by each individual player (Gi) and an identification device reader (L_DID_Gi) connected to the interaction device (2), and preferably located in proximity to said interaction device (2), wherein said representative signal of presence (S_Gi) and/or said request signal (S_Gi_req) is generated by said identification device reader (L_DID_Gi) after having read said identification device (DID_Gi).

11. The system according to claim 10 wherein said wearable identification device (DID_Gi) comprises a bracelet provided with an NFC transceiver.

12. The system according to any one of the preceding claims comprising a cloud memory (CL) comprising said video memory (DB_Vid), wherein said video memory (DB_Vid) is accessible by downloading said video portion (Stream 1_Gi, Stream2_Gi) by said recognised player.

13. The system according to any one of the preceding claims comprising a user device (4) associated with said player (Gi) comprising said player identifier (ID_Gi) and configured to be connected to said cloud memory (CL) for downloading said video portion (Stream 1_Gi, Stream2_Gi) subject to verifying the correspondence between said player identifier (ID_Gi) requiring the video portion (Stream 1_Gi, Stream2_Gi) and said identifier (ID_Gi) of said recognised player associated with said video portion (Stream1_Gi, Stream2_Gi) in said cloud memory (CL).

14. The system according to claim 13 wherein said user device (4), in particular a smartphone, associated with said player (Gi) comprises a software application configured to:
- allow a registration of said player (Gi) for a said sports event (ES);
- be connected to said cloud memory (CL) for downloading said video portion (Stream 1_Gi, Stream2_Gi) subject to checking the correspondence between said player identifier (ID_Gi) associated with said user device (4) and said identifier (ID_Gi) of said recognised player associated with said video portion (Stream 1_Gi, Stream2_Gi) in said cloud memory (CL).

15. A computer program configured, when running, to run the functions of said interaction device (2), of said central processing unit (10) and of said user device (4) operating in said system of one or more of the preceding claims.

## Patentansprüche

1. System zur bedingten Erzeugung von Videos (Stream1_Gi, Stream2_Gi), die einem Sportereignis (ES) inhärent sind, umfassend:
o eine Umgebung (AMB) für die Durchführung des Sportereignisses (ES);
o mindestens eine Fernsehkamera (TLC1; TLC2), die in der Umgebung (AMB) installiert ist und mindestens einer Leistungszone (Z_ES1; Z_ES2) des Sportereignisses (ES) zugewandt ist, die angeordnet ist, um einen entsprechenden zeitgesteuerten Videostream (Stream1; Stream2) des Ereignisses (ES) in der mindestens einen Leistungszone (Z_ES1; Z_ES2) aufzuzeichnen;
o eine Vielzahl von Spielern/innen (Gi), die am Sportereignis (ES), das in der Umgebung (AMB) stattfindet, teilnehmen und für dieses aufgezeichnet werden;
o einen elektronischen Speicher von Sportereignissen (DB_ES), umfassend Daten von Sportereignissen (DESi), die einem jeden der Sportereignisse (ES) zugeordnet sind, Spielerdaten (DGi), die einem/r jeden einzelnen Spieler/in (Gi) zugeordnet sind, und Teamdaten (DSi), die einem jeden einzelnen Team (Si) zugeordnet sind, wobei ein/e jede/r einzelne Spieler/in (Gi), ein jedes einzelne Team (Si) und ein jedes Sportereignis (ES) jeweils durch eine entsprechende Spielerkennung (ID_Gi), Teamkennung (ID_Si) und Sportereigniskennung (ID_ESi) identifiziert ist;
o eine Interaktionsvorrichtung (2), die sich in der Nähe der mindestens einen Leistungszone (Z_ES1; Z_ES2) befindet und Folgendes umfasst:
eine Benutzerschnittstelle (22) zum Verbinden mit den einzelnen Spielern/innen (Gi), wobei die Benutzerschnittstelle (22) konfiguriert ist, um ein repräsentatives Anwesenheitssignal (S_Gi) von einem/r jeden der einzelnen Spieler/innen (Gi) zu empfangen,
wobei das repräsentative Anwesenheitssignal (S_Gi) die Spielerkennung (ID_Gi) umfasst;
eine lokale Verarbeitungseinheit (21), die mit dem elektronischen Speicher von Sportereignissen (DB_ES) verbunden und konfiguriert ist, um:
- die Anwesenheit (PGi) eines/r jeden der einzelnen Spieler/innen (Gi) in dem elektronischen Speicher von Sportereignissen (DB_ES) als Funktion der entsprechenden Spielerkennung (ID_Gi) zu verifizieren, die über die Benutzerschnittstelle (22) empfangen wird, und im Falle einer bestätigten Anwesenheit, um ein Signal der bestätigten Anwesenheit (S_Pres_OK) zu erzeugen;
- eine Zuordnung (AGi) eines/r jeden einzelnen Spielers/in (Gi) mit dem Sportereignis (ES) zu verifizieren und im Falle einer bestätigten Zuordnung des/r Spielers/in (AGi_OK), um ein erkanntes Spielerbestätigungssignal (S_AGI_OK) zu erzeugen;
- indem eine wählbare Anzahl von Spielern/innen kontrolliert wird, die zu mindestens einer Teilmenge (SUB_Gi) der Spieler/innen (Gi) gehören; - um ein Sportereignis-Startsignal (S_INIT_ES) als Funktion des erzeugten erkannten Spielerbestätigungssignals (S_AGI_OK) für die mindestens eine Teilmenge (SUB_Gi) der Spieler/in (Gi) zu erzeugen;
Übertragungsmittel (23), die angeordnet sind, um das Sportereignis-Startsignal (S_INIT_ES) an die mindestens eine Fernsehkamera (TLC1; TLC2) zu übertragen, wodurch eine Aufzeichnungsstartzeit (t0_REC) der zeitgesteuerten Videostreams (Stream1; Stream2) bestimmt wird;
**dadurch gekennzeichnet, dass**:
die Benutzerschnittstelle (22) ferner angeordnet ist, um:
ein Anforderungssignal (S_Gi_req) von einem/r erkannten Spieler/in zu empfangen, das für eine Anforderung zur Erzeugung eines Videos repräsentativ ist, das einem Videoabschnitt (Stream1_Gi, Stream2_Gi) der Videostreams (Stream1, Stream2) entspricht, wobei das Anforderungssignal (S_Gi_req) zu einer Anforderungszeit (t1_Req) nach der Aufzeichnungsstartzeit (t0_REC) empfangen wird;
o wobei das System ferner eine zentrale Verarbeitungseinheit (10) in Datenkommunikation mit mindestens einer der Fernsehkameras (TLC1; TLC2) und mit der Interaktionsvorrichtung (2) umfasst und konfiguriert ist, um:
von der lokalen Verarbeitungseinheit (21) Folgendes zu empfangen:
- das Sportereignis-Startsignal (S_INIT_ES), das sich auf die Aufzeichnungsstartzeit (t0_REC) bezieht;
- das Anforderungssignal (S_Gi_req), das zu der Anforderungszeit (t1_Req) nach der Aufzeichnungsstartzeit (t0_REC) empfangen wird;
den Videostream (Stream1; Stream2) von der mindestens einen Fernsehkamera (TLC1; TLC2) nach einem vorherigen Empfang des Sportereignis-Startsignals (S_INIT_ES) zu empfangen;
den Videostream (Stream1; Stream2) als Funktion des Anforderungssignals (S_Gi_req) zu verarbeiten, wodurch der definierte Videoabschnitt (Stream1_Gi, Stream2_Gi) als Funktion der Anforderungszeit (t1_Req), eines auswählbaren repräsentativen Werts einer Amplitude (ΔA) der Umgebung (AMB), die für eine Oberflächenmessung der Umgebung (AMB) repräsentativ ist, und einer auswählbaren Dauer wichtiger Ereignisse (ΔtEV) erhalten wird, wodurch eine Erzeugung des Videoabschnitts (Stream1_Gi,
Stream2_Gi) verursacht wird, die durch die Auswahl der Anforderungszeit (t1_Req), des repräsentativen Werts einer Amplitude (ΔA) der Umgebung (AMB) und der auswählbaren Dauer wichtiger Ereignisse (ΔtEV) bedingt ist;
den erhaltenen Videoabschnitt (Stream1_Gi, Stream2_Gi) an einen Videospeicher (DB_Vid) zu übertragen, wobei der erhaltene Videoabschnitt (Stream1_Gi, Stream2_Gi) der Kennung (ID_Gi) des/r erkannten Spielers/in zugeordnet ist, so dass er nur unter der Voraussetzung einer Identifizierung für ihn/sie zugänglich ist.

2. System nach Anspruch 1, wobei die Dauer wichtiger Ereignisse (ΔEVi) als Funktion der Art des Sportereignisses (ES) ausgewählt werden kann.

3. System nach einem der vorhergehenden Ansprüche, wobei in dem elektronischen Speicher von Sportereignissen (DB_ES):
- einem jedem Sportereignis (ES) mindestens zwei Teams (Si) zugeordnet sind, so dass mindestens zwei der Teamkennungen (ID_Si) mit der Sportereigniskennung (ID_ESi) verbunden sind;
- einem jeden einzelnen Team (Si) eine Vielzahl von Spielern/innen (Gi) zugeordnet ist, so dass mit dieser Teamkennung (ID_Si) eine Vielzahl von Spielerkennungen (ID_Gi) verbunden ist.

4. System nach Anspruch 3, wobei:
die mindestens eine Fernsehkamera (TLC1; TLC2) eine erste Fernsehkamera (TLC1) und eine zweite Fernsehkamera (TLC2) umfasst;
die mindestens eine Leistungszone (Z_ES1; Z_ES2) umfasst eine erste Leistungszone (Z_ES1) und eine zweite Leistungszone (Z_ES2), wobei eine entsprechende Teamkennung (ID_Si) mit einer jeden Leistungszone (Z_ES1; Z_ES2) verbunden ist;
wobei die erste Fernsehkamera (TLC1) bereitgestellt wird, um einen ersten Videostream (Stream 1) der zeitgesteuerten Videostreams (Stream 1; Stream2) des Sportereignisses (ES) in der ersten Leistungszone (Z_ES1) aufzuzeichnen;
wobei die zweite Fernsehkamera (TLC2) bereitgestellt wird, um einen zweiten Videostream (Stream2) der zeitgesteuerten Videostreams (Stream1; Stream2) des Sportereignisses (ES) in der zweiten Leistungszone (Z_ES2) aufzuzeichnen.

5. System nach Anspruch 4, wobei:
die lokale Verarbeitungseinheit (21) ferner zu Folgendem konfiguriert ist:
um zu bestimmen, für welche zwischen der ersten Fernsehkamera (TLC1) oder der zweiten Fernsehkamera (TLC2) das Sportereignis-Startsignal (S_INIT_ES), als Funktion des/r erkannten Spielers/in, einer entsprechenden Teamkennung (ID_Si) und einer entsprechenden Leistungszone (Z_ES1; Z_ES2) erzeugt werden soll,
die eine zentrale Verarbeitungseinheit (10) ferner konfiguriert ist:
um eines des ersten Videostreams (Stream 1) und des zweiten Videostreams (Stream2) von einer der ersten Fernsehkamera (TLC1) und der zweiten Fernsehkamera (TLC2), für die das Sportereignis-Startsignal (S_INIT_ES) erzeugt wird, zu empfangen.

6. System nach einem der vorhergehenden Ansprüche, wobei die Benutzerschnittstelle (22) einen Touchscreen (221) umfasst, der digitale Fotografien (Pic_Gi) umfasst, die jeweils einem/r Spieler/in (Gi) entsprechen, wobei die digitalen Fotografien (Pic_Gi) aus einem/r jeden entsprechenden Spieler/in (Gi) ausgewählt werden können, um das repräsentative Anwesenheitssignal (S_Gi) zu erzeugen.

7. System nach Anspruch 6, wobei die Auswahl der Fotografie (Pic_Gi) durch die Berührung des/r Spielers/in (Gi) an seinem/ihrem eigenen digitalen Foto (Pic_Gi) erfolgt.

8. System nach Anspruch 6 oder 7, wobei der Touchscreen (221) Anforderungssymbole (ICO_Req) von Videos wichtiger Ereignisse (EV) umfasst, die jeweils einem/r erkannten Spieler/in entsprechen, und das Anforderungssignal (S_Gi_req) durch eine Berührung des/r erkannten Spielers/in auf seinem/ihrem eigenen Anforderungssymbol (ICO_Req) bestimmt wird.

9. System nach einem der Ansprüche 1 bis 7, wobei das Anforderungssignal (S_Gi_req) durch eine Erkennungssoftware (SW) des/r erkannten Spielers/in bestimmt wird, die den/die Spieler/in (Gi) als Funktion von einer oder mehreren aus einer Gesichtserkennung, einer Erkennung der Trikotnummer und einer wichtigen Aktion identifiziert.

10. System nach einem der Ansprüche 1 bis 8, umfassend eine Identifikationsvorrichtung (DID_Gi), die von einem/r jeden einzelnen Spieler/in (Gi) tragbar ist, und einen Identifikationsvorrichtungsleser (L_DID_Gi), der mit der Interaktionsvorrichtung (2) verbunden ist und sich vorzugsweise in der Nähe der Interaktionsvorrichtung (2) befindet, wobei das repräsentative Anwesenheitssignal (S_Gi) und/oder das Anforderungssignal (S_Gi_req) nach dem Lesen der Identifikationsvorrichtung (DID_Gi) von dem Identifikationsvorrichtungsleser (L_DID_Gi) erzeugt wird.

11. System nach Anspruch 10, wobei die tragbare Identifikationsvorrichtung (DID_Gi) ein Armband umfasst, das mit einem NFC-Transceiver versehen ist.

12. System nach einem der vorhergehenden Ansprüche, umfassend einen Cloud-Speicher (CL), der den Videospeicher (DB_Vid) umfasst, wobei auf den Videospeicher (DB_Vid) durch Herunterladen des Videoabschnitts (Stream1_Gi,Stream2_Gi) durch den/ie erkannte/n Spieler/in zugegriffen werden kann.

13. System nach einem der vorhergehenden Ansprüche, umfassend eine Benutzervorrichtung (4), die dem/r Spieler/in (Gi) zugeordnet ist, die die Spielerkennung (ID_Gi) umfasst und konfiguriert ist, um mit dem Cloud-Speicher (CL) zum Herunterladen des Videoabschnitts (Stream1_Gi, Stream2_Gi) verbunden zu werden, der der Verifizierung der Übereinstimmung zwischen der Spielerkennung (ID_Gi), die den Videoabschnitt (Stream1_Gi, Stream2_Gi) erfordert, und der Kennung (ID_Gi) des/r erkannten Spielers/in, der/die dem Videoabschnitt (Stream1_Gi,Stream2_Gi) zugeordnet ist, in dem Cloud-Speicher (CL) unterzogen wird.

14. System nach Anspruch 13, wobei die Benutzervorrichtung (4), insbesondere ein Smartphone, die dem/r Spieler/in (Gi) zugeordnet ist, eine Softwareanwendung umfasst, die konfiguriert ist, um:
- eine Aufzeichnung des/r Spielers/in (Gi) für ein Sportereignis (ES) zu ermöglichen;
- mit dem Cloud-Speicher (CL) zum Herunterladen des Videoabschnitts (Stream1_Gi, Stream2_Gi) verbunden zu werden, der der Überprüfung der Übereinstimmung zwischen der Spielerkennung (ID_Gi), die der Benutzervorrichtung (4) zugeordnet ist, und der Kennung (ID_Gi) des/r erkannten Spielers/in, der/die dem Videoabschnitt (Stream1_Gi, Stream2_Gi) zugeordnet ist, in dem Cloud-Speicher (CL) unterzogen wird.

15. Computerprogramm, das dazu konfiguriert ist, beim Ausführen die Funktionen der Interaktionsvorrichtung (2), der zentralen Verarbeitungseinheit (10) und der Benutzervorrichtung (4) auszuführen, die in dem System nach einem oder mehreren der vorhergehenden Ansprüche arbeiten.

## Revendications

1. Système de génération conditionnée de vidéos (Stream1_Gi, Stream2_Gi) inhérentes à un événement sportif (ES), comprenant :
o un environnement (AMB) pour le déroulement dudit événement sportif (ES) ;
o au moins une caméra de télévision (TLC1 ; TLC2) installée en correspondance dudit environnement (AMB), orientée vers au moins une zone de déroulement (Z_ES1 ; Z_ES2) dudit événement sportif (ES), conçue pour enregistrer un flux vidéo temporisé (Stream1 ; Stream2) correspondant dudit événement (ES) dans ladite au moins une zone de déroulement (Z_ES1 ; Z_ES2) ;
∘ une pluralité de joueurs (Gi) participant et étant enregistrés pour ledit événement sportif (ES) situé dans ledit environnement (AMB) ;
∘ une mémoire électronique d'événements sportifs (DB_ES), comprenant des données d'événements sportifs (DESi) associées à chacun desdits événements sportifs (ES), des données de joueur (DGi) associées à chaque joueur individuel (Gi) et des données d'équipe (DSi) associées à chaque équipe individuelle (Si), dans lequel chaque joueur individuel (Gi), équipe individuelle (Si) et événement sportif (ES) sont identifiés par, respectivement, un identifiant de joueur (ID_Gi), un identifiant d'équipe (ID_Si) et un identifiant d'événement sportif (ID_ESi) correspondants ;
∘ un dispositif d'interaction (2) situé à proximité de ladite au moins une zone de déroulement (Z_ES1 ; Z_ES2) et comprenant :
une interface utilisateur (22) pour interfacer avec lesdits joueurs individuels (Gi), dans lequel ladite interface utilisateur (22) est configurée pour recevoir un signal représentatif de présence (S_Gi) provenant de chacun desdits joueurs individuels (Gi), dans lequel ledit signal représentatif de présence (S_Gi) comprend ledit identifiant de joueur (ID_Gi) ;
une unité de traitement locale (21) connectée à ladite mémoire électronique des événements sportifs (DB_ES) et configurée pour :
- vérifier une présence (PGi) de chacun desdits joueurs individuels (Gi) dans ladite mémoire électronique des événements sportifs (DB_ES) en fonction dudit identifiant de joueur (ID_Gi) correspondant reçu par l'intermédiaire de ladite interface utilisateur (22) et, en cas de présence confirmée, générer un signal de présence confirmée (S_Pres_OK) ;
- vérifier une association (AGi) de chacun desdits joueurs individuels (Gi) avec ledit événement sportif (ES) et, en cas d'association confirmée dudit joueur (AGi_OK), générer un signal de confirmation de joueur reconnu (S_AGI_OK) ;
- contrôler un nombre sélectionnable de joueurs appartenant à au moins un sous-ensemble (sub_Gi) desdits joueurs (Gi) ; - générer un signal de début d'événement sportif (S_INIT_ES) en fonction dudit signal de confirmation de joueur reconnu (S_AGI_OK) pour ledit au moins un sous-ensemble (sub_Gi) desdits joueurs (Gi) ;
des moyens de transmission (23) disposés pour transmettre ledit signal de début d'événement sportif (S_INIT_ES) à ladite au moins une caméra de télévision (TLC1 ; TLC2), déterminant ainsi une heure de début d'enregistrement (t0_REC) desdits flux vidéo temporisés (Stream1 ; Stream2) ;
**caractérisé en ce que** :
ladite interface utilisateur (22) est de plus disposée pour :
recevoir un signal de demande (S_Gi_req) d'un joueur reconnu représentatif d'une demande de génération d'une vidéo correspondant à une partie de vidéo (Stream1_Gi, Stream2_Gi) desdits flux vidéo (Stream1, Stream2), dans lequel ledit signal de demande (S_Gi_req) est reçu à une heure de demande (t1_Req) postérieure à ladite heure de début d'enregistrement (t0_REC) ;
∘ ledit système comprend de plus une unité centrale de traitement (10) en communication de données avec au moins une caméra de télévision (TLC1 ; TLC2) et avec ledit dispositif d'interaction (2) et configurée pour :
recevoir de ladite unité de traitement locale (21) :
- ledit signal de début d'événement sportif (S_INIT_ES) se référant à ladite heure de début d'enregistrement (t0_REC) ;
- ledit signal de demande (S_Gi_req) reçu à ladite heure de demande (t1_Req) après l'heure de début d'enregistrement (t0_REC) ;
recevoir ledit flux vidéo (Stream1 ; Stream2) de ladite au moins une caméra de télévision (TLC1 ; TLC2) à la suite d'une réception antérieure dudit signal de début d'événement sportif (S_INIT_ES) ;
traiter ledit flux vidéo (Stream1 ; Stream2) en fonction dudit signal de demande (S_Gi_req), obtenant ainsi ladite partie de vidéo définie (Stream1_Gi, Stream2_Gi) en fonction dudit temps de demande (t1_Req), d'une valeur représentative sélectionnable d'une amplitude (ΔA) dudit environnement (AMB) représentative d'une mesure de surface dudit environnement (AMB), et d'une durée d'événement important sélectionnable (ΔtEV), provoquant ainsi une génération de ladite partie de vidéo (Stream1_Gi, Stream2_Gi) conditionnée par ladite sélection dudit temps de demande (t1_Req), de ladite valeur représentative d'une amplitude (ΔA) dudit environnement (AMB) et de ladite durée d'événement important sélectionnable (ΔtEV) ;
transmettre ladite partie de vidéo (Stream1_Gi,
Stream2_Gi) obtenue à une mémoire vidéo (DB_Vid) dans laquelle ladite partie de vidéo (Stream1_Gi, Stream2_Gi) obtenue est associée audit identifiant (ID_Gi) dudit joueur reconnu de manière à ce qu'il n'y ait accès que sous réserve d'identification.

2. Système selon la revendication 1, dans lequel ladite durée de l'événement important (ΔEVi) peut être sélectionnée en fonction du type d'événement sportif (ES) .

3. Système selon l'une quelconque des revendications précédentes, dans lequel, dans ladite mémoire électronique des événements sportifs (DB_ES) :
- au moins deux équipes (Si) sont associées à chaque événement sportif (ES) de sorte qu'au moins deux desdits identifiants d'équipe (ID_Si) sont reliés audit identifiant d'événement sportif (ID_ESi) ;
- une pluralité de joueurs (Gi) est associée à chaque équipe individuelle (Si), de sorte qu'une pluralité d'identifiants de joueurs (ID_Gi) est reliée audit identifiant d'équipe (ID_Si).

4. Système selon la revendication 3, dans lequel :
ladite au moins une caméra de télévision (TLC1 ; TLC2) comprend une première caméra de télévision (TLC1) et une deuxième caméra de télévision (TLC2) ;
ladite au moins une zone de déroulement (Z_ES1 ; Z_ES2) comprend une première zone de déroulement (Z_ES1) et une deuxième zone de déroulement (Z_ES2), un identifiant d'équipe (ID_Si) correspondant étant relié à chaque zone de déroulement (Z_ES1 ; Z_ES2) ;
dans lequel ladite première caméra de télévision (TLC1) est prévue pour enregistrer un premier flux vidéo (Stream1) desdits flux vidéo temporisés (Stream1 ;
Stream2) dudit événement sportif (ES) dans ladite première zone de déroulement (Z_ES1) ;
dans lequel ladite deuxième caméra de télévision (TLC2) est prévue pour enregistrer un deuxième flux vidéo (Stream2) desdits flux vidéo temporisés (Stream1 ;
Stream2) dudit événement sportif (ES) dans ladite deuxième zone de déroulement (Z_ES2).

5. Système selon la revendication 4, dans lequel :
ladite unité de traitement locale (21) est de plus configurée pour :
déterminer pour quelle caméra entre ladite première caméra de télévision (TLC1) et ladite deuxième caméra de télévision (TLC2) générer ledit signal de début d'événement sportif (S_INIT_ES), en fonction dudit joueur reconnu, d'un identifiant d'équipe (ID_Si) correspondant et d'une zone de déroulement (Z_ES1 ; Z_ES2) correspondante,
ladite une unité centrale de traitement (10) est de plus configurée pour :
recevoir un flux entre ledit premier flux vidéo (Stream1) et ledit deuxième flux vidéo (Stream2) en provenance d'une caméra entre ladite première caméra de télévision (TLC1) et ladite deuxième caméra de télévision (TLC2) pour lesquelles ledit signal de début d'événement sportif (S_INIT_ES) a été généré.

6. Système selon l'une quelconque des revendications précédentes, dans lequel ladite interface utilisateur (22) comprend un écran tactile (221) comprenant des photographies numériques (Pic_Gi), chacune correspondant à un dit joueur (Gi), lesdites photographies numériques (Pic_Gi) pouvant être sélectionnées à partir de chaque dit joueur (Gi) correspondant pour générer ledit signal représentatif de présence (S_Gi).

7. Système selon la revendication 6, dans lequel ladite sélection de ladite photographie (Pic_Gi) s'effectue par le toucher dudit joueur (Gi) sur sa propre photographie numérique (Pic_Gi).

8. Système selon la revendication 6 ou 7, dans lequel ledit écran tactile (221) comprend des icônes de demande (ICO_Req) de vidéos d'événements importants (EV), chacune correspondant à un joueur reconnu, et ledit signal de demande (S_Gi_req) est déterminé par un toucher dudit joueur reconnu sur sa propre dite icône de demande (ICO_Req) .

9. Système selon l'une quelconque des revendications 1 à 7, dans lequel ledit signal de demande (S_Gi_req) est déterminé par le logiciel de reconnaissance (SW) dudit joueur reconnu qui identifie ledit joueur (Gi) en fonction d'un ou de plusieurs éléments parmi une reconnaissance faciale, une reconnaissance du numéro de maillot et une action importante.

10. Système selon l'une quelconque des revendications 1 à 8, comprenant un dispositif d'identification (DID_Gi) pouvant être porté par chaque joueur individuel (Gi) et un lecteur de dispositif d'identification (L_DID_Gi) connecté au dispositif d'interaction (2), et de préférence situé à proximité dudit dispositif d'interaction (2), dans lequel ledit signal représentatif de présence (S_Gi) et/ou ledit signal de demande (S_Gi_req) est généré par ledit lecteur de dispositif d'identification (L_DID_Gi) après avoir lu ledit dispositif d'identification (DID_Gi).

11. Système selon la revendication 10, dans lequel ledit dispositif d'identification portable (DID_Gi) comprend un bracelet équipé d'un émetteur-récepteur CCP.

12. Système selon l'une quelconque des revendications précédentes, comprenant une mémoire en nuage (CL) comprenant ladite mémoire vidéo (DB_Vid), dans lequel ladite mémoire vidéo (DB_Vid) est accessible par le téléchargement de ladite partie de vidéo (Stream1_Gi, Stream2_Gi) par ledit joueur reconnu.

13. Système selon l'une quelconque des revendications précédentes, comprenant un dispositif utilisateur (4) associé audit joueur (Gi) comprenant ledit identifiant de joueur (ID_Gi) et configuré pour être connecté à ladite mémoire en nuage (CL) pour télécharger ladite partie de vidéo (Stream1_Gi, Stream2_Gi) sous réserve de la vérification de la correspondance entre ledit identifiant de joueur (ID_Gi) requérant la partie de vidéo (Stream1_Gi, Stream2_Gi) et ledit identifiant (ID_Gi) dudit joueur reconnu associé à ladite partie de vidéo (Stream1_Gi, Stream2_Gi) dans ladite mémoire en nuage (CL).

14. Système selon la revendication 13, dans lequel ledit dispositif utilisateur (4), en particulier un Smartphone, associé audit joueur (Gi) comprend une application logicielle configurée pour :
- permettre une inscription dudit joueur (Gi) à un dit événement sportif (ES) ;
- être connectée à ladite mémoire en nuage (CL) pour télécharger ladite partie de vidéo (Stream1_Gi, Stream2_Gi) sous réserve de vérifier la correspondance entre ledit identifiant de joueur (ID_Gi) associé audit dispositif utilisateur (4) et ledit identifiant (ID_Gi) dudit joueur reconnu associé à ladite partie de vidéo (Stream1_Gi, Stream2_Gi) dans ladite mémoire en nuage (CL) .

15. Programme d'ordinateur configuré, lors de l'exécution, pour exécuter les fonctions dudit dispositif d'interaction (2), de ladite unité centrale de traitement (10) et dudit dispositif utilisateur (4) fonctionnant dans ledit système selon l'une ou plusieurs des revendications précédentes.
